# EUROPÄISCHE PATENTSCHRIFT

(11) **EP 2 558 342 B1**
(45) Veröffentlichungstag und Bekanntmachung des Hinweises auf die Patenterteilung: **29.06.2016**
(21) Anmeldenummer: 11712178.0
(22) Anmeldetag: 29.03.2011
(51) Int. Cl.: B60W 50/00, B60K 6/52, B60K 6/448, B60W 10/06, B60W 10/08, B60W 20/00, B60W 30/02, B60W 30/18

(54) **VERFAHREN ZUM BETREIBEN EINES KRAFTFAHRZEUGS MIT ZUMINDEST ZWEI ANTRIEBEN SOWIE KRAFTFAHRZEUG MIT ZUMINDEST ZWEI ANTRIEBEN**
METHOD FOR OPERATING A MOTOR VEHICLE HAVING AT LEAST TWO DRIVES AND A MOTOR VEHICLE HAVING AT LEAST TWO DRIVES
PROCÉDÉ POUR FAIRE FONCTIONNER UN VÉHICULE AUTOMOBILE AVEC AU MOINS DEUX ENTRAÎNEMENTS ET VÉHICULE AUTOMOBILE COMPRENANT AU MOINS DEUX ENTRAÎNEMENTS

(30) Priorität: 14.04.2010 DE 102010014971
(43) Veröffentlichungstag der Anmeldung: 20.02.2013
(73) Patentinhaber: Audi AG, 85045 Ingolstadt (DE)
(72) Erfinder: MEITINGER, Karl-Heinz, 81667 München (DE); WEIN, Michael, 92358 Seubersdorf (DE); STRASSER, Sebastian, 85053 Ingolstadt (DE); WERNER, Martin, 85049 Gerolfing (DE)
(74) Vertreter: Brandt, Kai
(86) Internationale Anmeldenummer: PCT/EP2011/001560
(87) Internationale Veröffentlichungsnummer: WO 2011/128024

(56) Entgegenhaltungen:
- EP-A2- 1 369 284
- WO-A1-03/059680
- WO-A1-2010/031678
- WO-A2-2008/071381
- DE-A1-102004 049 324

## Beschreibung

Die Erfindung betrifft ein Verfahren zum Betreiben eines Kraftfahrzeugs mit zumindest zwei Antrieben, insbesondere für unterschiedliche Achsen des Kraftfahrzeugs. Sie betrifft auch ein Kraftfahrzeug.

Ein Verfahren zum Betreiben eines Kraftfahrzeugs mit zwei elektrischen Antrieben für unterschiedliche Achsen des Kraftfahrzeugs ist insbesondere aus der US 2009/0118924 A1 bekannt. Das Verfahren macht Gebrauch von einer Steuereinheit. Diese empfängt Eingaben, z. B. eine Eingabe, über die ein bestimmtes Drehmoment angefordert wird, wie es sich aus der Stellung eines Fahr- bzw. Gaspedals ergibt (gleiches gilt für ein Bremspedal). Weitere Eingaben stammen von einem Drehzahlsensor sowie Sensoren, die Parameter wie z. B. Druck und Temperaturen von Bauteilen des Kraftfahrzeugs, insbesondere des Motors, und auch der Umgebung betreffen. Das Steuergerät sendet dann Steuersignale an Aktuatoren, die die Motoren ansteuern, z. B. Kraftstoffinjektoren, eine Drosselklappe etc. Es wird ein minimales und ein maximales Drehmoment für jeden Motor ermittelt. Es werden bestimmte Kriterien angelegt, hierbei werden drei unterschiedliche Fälle unterschieden. Schließlich erfolgt eine Zuteilung eines Ausgangsdrehmoments zu den einzelnen Motoren.

Auch gemäß der DE 10 2006 000 306 A1 wird beim Betrieb eines Kraftfahrzeugs mit zwei Motoren ein angefordertes Drehmoment ermittelt. In die Berechnung der Drehmomentanforderung gehen hierbei die Gangschaltungsposition, die Fahrzeuggeschwindigkeit, die Drehzahlen der beiden Motoren sowie eine Eingangsgrenze und Ausgangsgrenze der Batterie ein. Zu einem Motor wird eine untere Drehmomentbeschränkung berechnet. Im Abgleich mit der Drehmomentanforderung ergibt sich dann ein Drehmomentbefehl an den betreffenden Motor. Das Verfahren aus der DE 10 2006 000 306 A1 ist auf eine Bremssteuerung beschränkt, wird also beim Abbremsen des Kraftfahrzeugs eingesetzt.

Aus der DE 10 2004 034 401 A1 ist es bekannt, dass eine Antriebssteuerung zwei Antriebseinheiten derart aufeinander abgleicht, dass eine Gesamtantriebskraft, die von den beiden Antriebseinheiten abgegeben wird, um Räder anzutreiben, einer Fahreranforderungsabgabe entspricht.

Die DE 10 2004 049 324 A1 beschreibt, dass bei einem Hybridfahrzeug in Abhängigkeit von einer Pedalstellung von einem ersten Modul der Fahrerwunsch bestimmt wird und ein diesem Fahrerwunsch entsprechender Wert für ein Antriebsmoment an eine Steuereinheit geleitet wird, wo weitere Messwerte wie Fahrgeschwindigkeit etc. berücksichtigt werden, um einen Verteilungsgrad zu berechnen, der dem Verhältnis des Moments des Elektromotors zum Antriebsmoment entspricht. Dieser Verteilungsgrad wird an eine Regelstufe weitergeleitet, die entsprechend Fahrdynamikfunktionen einen zweiten Verteilungsgrad berechnet. Beide Verteilungsgrade werden einer Koordinationsstufe zugeleitet, die anhand von Stellgrenzen der Motoren den endgültigen Verteilungsgrad bestimmt.

Die WO 2010/031678 A1 offenbart, dass zur Einstellung einer motorischen Antriebseinrichtung mit zwei Antriebseinheiten zunächst ein Gesamtantriebsmoment ermittelt wird und nachfolgend daraus die Momentenverteilung für die Antriebseinheiten festgelegt wird, wobei Randbedingungen aus fahrdynamischen Regelsystemen berücksichtigt werden. Daraus wird dann unter Berücksichtigung von u.a. aus den motorischen Antriebseinheiten stammenden Restriktionen eine verbrauchsoptimale Momentenverteilung berechnet. Kann diese nicht realisiert werden, erfolgt eine Rückmeldung, sodass eine erneute Berechnung der verbrauchsoptimalen Momentenverteilung erfolgt.

Die aus dem Stand der Technik bekannten Verfahren zum Betreiben eines Kraftfahrzeugs mit zwei Antrieben sorgen für eine Zuteilung von angefordertem Drehmoment zu den einzelnen Antrieben nach bestimmten Kriterien wie z. B. der Energieeffizienz bzw. der Verfügbarkeit von Strom durch eine Batterie für einen elektrischen Antrieb. Die Verteilung von Drehmoment auf einzelne Achsen des Kraftfahrzeugs hat jedoch auch unmittelbare Wirkung auf das Fahrverhalten des Kraftfahrzeugs. Es ist bekannt, Drehmoment zur Stabilisierung eines Kraftfahrzeugs von einer Achse auf eine andere Achse zu verlagern, gegebenenfalls auch von einem Rad einer Achse auf ein anderes Rad einer Achse.

Es wäre wünschenswert, könnte in einem Kraftfahrzeug mit zwei Antrieben auch in ähnlicher Weise für eine Stabilisierung des Fahrzeugs gesorgt werden, zumindest in bestimmten Situationen, wo dies notwendig ist, etwa bei Kurvenfahrten oder zur Verbesserung der Traktion.

Es ist somit Aufgabe der Erfindung, ein Verfahren zum Betreiben eines Kraftfahrzeugs mit zumindest zwei Antrieben dahingehend weiter zu entwickeln, dass in erhöhtem Maße für eine Stabilisierung des Kraftwagens gesorgt werden kann. In einem Aspekt der Erfindung soll hierzu ein geeigneter Kraftwagen bereitgestellt werden.

Die Aufgabe wird hinsichtlich des Verfahrens durch ein Verfahren mit den Merkmalen gemäß Patentanspruch 1 gelöst und hinsichtlich des Kraftwagens durch einen Kraftwagen mit den Merkmalen gemäß Patentanspruch 6 gelöst.

Erfindungsgemäß gibt somit die erste Steuereinrichtung zunächst aufgrund der Messwerte eine Schar von Kombinationen jeweiliger Teildrehmomente für einzelne Antreibseinheiten (die einzelnen Antriebe oder auch für Gruppen von Antrieben, z.B. an einer Achse) vor und sendet Datensignale zur Beschreibung dieser Kombinationen an eine zweite Steuereinrichtung. Diese zweite Steuereinrichtung empfängt Messwerte zu Größen, von denen Zweitgrößen von denjenigen Erstgrößen verschieden sind, zu denen die von der ersten Steuereinrichtung empfangenen Messwerte gehören. Insbesondere in Abhängigkeit von den von ihr empfangenen Messwerten wählt die zweite Steuereinrichtung zumindest eine Kombination jeweiliger Teildrehmomente für die einzelnen Antriebe (oder Gruppen von Antrieben) aus der Schar von Kombinationen aus und sendet Datensignale zur Beschreibung dieser zumindest einen Kombination an die erste Steuereinrichtung. Die erste Steuereinrichtung legt daraufhin die Teildrehmomente für die einzelnen Antriebe fest; alternativ tut sie dies nur für Gruppen von Antrieben oder eine Gruppe und einen einzelnen Antrieb. Im Regelfall, dass die zweite Steuereinrichtung mehr als zwei Kombinationen jeweiliger Teildrehmomente für die einzelnen Antriebe auswählt, erfolgt in der ersten Steuereinrichtung nochmals eine Auswahl aus diesen mehreren von der zweiten Steuereinrichtung ausgewählten Kombinationen, und zwar in Abhängigkeit von den Messwerten, welche von der ersten Steuereinrichtung empfangen werden.

Es gibt somit eine Aufgabenverteilung zwischen den einzelnen Steuereinrichtungen: Die erste Steuereinrichtung macht eine allgemeine Vorgabe, und die zweite Steuereinrichtung schränkt die Vorgabe dann ein. Die zweite Steuereinrichtung kann insbesondere die Aufgabe haben, die Stabilität des Fahrzeugs zu regeln. Die erste Steuereinrichtung hingegen kann dann zumindest in bestimmtem Umfang andere Kriterien anlegen, dies aber erst nach Einschränkung ihrer Möglichkeiten durch die zweite Steuereinrichtung. Die zweite Steuereinrichtung hat, weil sie die Möglichkeiten der ersten Steuereinrichtung einschränkt, eine wichtige Rolle. Die Einschränkung der Möglichkeiten kann insbesondere derart erfolgen, dass bei sämtlichen nach der Einschränkung verbleibenden Möglichkeiten der Drehmomentverteilung noch für eine ausreichende Stabilität des Fahrzeugs gesorgt ist.

In besonders einfacher Ausführungsform legt die erste Steuereinrichtung eine Bandbreite für die Teildrehmomente zumindest eines Antriebs oder für die Teildrehmomente mehrerer solcher Antriebe in Summe fest, die von der zweiten Steuereinrichtung eingeschränkt wird. Mit anderen Worten sendet die erste Steuereinrichtung eine Sendeinformation über ein maximales und ein minimales Teildrehmoment für zumindest einen Antrieb/ eine Antriebsgruppe an die zweite Steuereinrichtung, und die zweite Steuereinrichtung sendet in Antwort darauf eine Rücksendeinformation über ein maximales und minimales Teildrehmoment für genau diesen zumindest einen Antrieb/ genau diese Antriebsgruppe an die erste Steuereinrichtung, gegebenenfalls alternativ oder zusätzlich auch ein festgelegtes Teildrehmoment für diese. Eine Einschränkung in der Bandbreite lässt sich dann so definieren, dass zumindest für einen Zeitpunkt im Betrieb des Kraftfahrzeugs (nämlich insbesondere in einer vorbestimmten Fahrsituation, in der ein Eingriff einer Fahrwerksregelung erforderlich ist - auch Fahrdynamikregelung genannt) das maximale Teildrehmoment und/oder das festgelegte Teildrehmoment gemäß der Rücksendeinformation kleiner als das maximale Teildrehmoment gemäß der Sendeinformation ist; dann wäre eine Einschränkung der Bandbreite von oben gegeben. Alternativ kann das minimale Teildrehmoment und/oder das festgelegte Teildrehmoment gemäß der Rücksendeinformation größer als das minimale Drehmoment gemäß der Sendeinformation sein; dann erfolgt die Einschränkung von unten. Beides kann insbesondere gleichzeitig gegeben sein. Die Schar von Kombinationen entspricht dann sämtlichen Kombinationen, bei denen das Teildrehmoment für den zumindest einen Antrieb zwischen dem minimalen und dem maximalen Teildrehmoment liegt. Diese Schar kann durch eine Diskretisierung endlich sein, grundsätzlich können aber unendlich viele Werte zwischen dem minimalen und dem maximalen Teildrehmoment möglich sein, dann kann es also unendlich viele Kombinationen jeweiliger Teildrehmomente in dieser Schar geben.

Damit die zweite Steuereinrichtung eine solche Auswahl vornehmen kann, dass für eine erhöhte Stabilität des Kraftfahrzeugs gesorgt ist, empfängt sie bevorzugt Messwerte zu einer Gierrate des Kraftfahrzeugs, zu einer Längsbeschleunigung des Kraftfahrzeugs und/oder zu einer Querbeschleunigung des Kraftfahrzeugs und/oder zu einem Lenkwinkel an einer Lenkhandhabe und berücksichtigt bei der Auswahl der zumindest einen Kombination gegebenenfalls zumindest einen dieser Messwerte unmittelbar. Bei bestimmten Werten für die genannten Größen kann es sein, dass durch die zweite Steuereinrichtung sämtliche möglichen Kombinationen aus der Schar von Kombinationen auf einmal ausgewählt werden können. Dann ist ein Eingriff der Fahrwerkregelung also nicht erforderlich.

Bevorzugt ist zumindest ein Antrieb ein elektrischer Antrieb. In diesem Fall ist es insbesondere sinnvoll, wenn die erste Steuereinrichtung Messwerte zu einer dem elektrischen Antrieb zugeordneten Batterie empfängt, damit zur Steigerung der Effizienz bevorzugt ein elektrischer Antrieb gegenüber einer Verbrennungskraftmaschine bevorzugt wird oder ein elektrischer Antrieb gegenüber einem anderen elektrischen Antrieb bevorzugt wird, wenn die Batterie des bevorzugten elektrischen Antriebs seinen Betrieb für zumindest eine bestimmte Zeitdauer ermöglicht.

Die erste Steuereinrichtung kann außerdem Messwerte betreffend eine Drehzahl eines Motors und/oder eine Temperatur des Motors und/oder einen an einem Getriebe eingelegten Gang und/oder einen Betriebsmodus empfangen. Als Messwerte zu der Batterie kann insbesondere ein die von ihr bereitgestellte Spannung bzw. die in ihr gespeicherte Ladung, ihre Ladefähigkeit und ein ihre Temperatur beschreibender Messwert empfangen werden. Diese Messwerte können nach bestimmten Kriterien ausgewertet werden.

Das erfindungsgemäße Kraftfahrzeug weist zumindest zwei (insbesondere elektrische) Antriebe und eine erste Steuereinrichtung zum Zuteilen von Drehmoment zu den einzelnen Antrieben und zum Senden entsprechender Anforderungssignale an diese Antriebe auf. Es ist dadurch gekennzeichnet, dass die erste Steuereinrichtung mit einer zweiten Steuereinrichtung gekoppelt ist, die ihrerseits mit zumindest einer Messeinrichtung gekoppelt ist, welche von der ersten Steuereinrichtung getrennt ist, und wobei die zweite Steuereinrichtung dazu ausgelegt ist, an einem Prozess (Verfahren) der Zuteilung von Drehmoment zu den einzelnen Antrieben durch Austausch von Datensignalen mit der ersten Steuereinrichtung im Sinne des erfindungsgemäßen Verfahrens teilzuhaben und hierbei Messwerte der zumindest einen Messeinrichtung bei der Bildung ausgesandter Datensignale (nämlich zu ihrer Definition) zu berücksichtigen.

Jede Steuereinrichtung kann durch ein gesondertes Steuergerät bereitgestellt sein oder als Softwarefunktionalität (Block) in einem einzigen Steuergerät.

Durch die Erfindung werden zwei Steuereinrichtungen bereitgestellt, die beide gleichermaßen an der Zuteilung von Drehmoment zu den einzelnen Antrieben beteiligt sind. Dadurch wird es möglich, eine der Steuereinrichtungen mit der Aufgabe zu belegen, für eine Stabilität des Kraftfahrzeugs zu sorgen, während die andere Steuereinrichtung andere Kriterien einsetzen kann, z. B. die Energieeffizienz.

Bei einer bevorzugten Ausführungsform umfasst somit die zumindest eine Messeinrichtung einen Gierratensensor, einen Längsbeschleunigungssensor und/oder einen Querbeschleunigungssensor und/oder Mittel zum Messen des Lenkwinkels an einer Lenkhandhabe, damit die zweite Steuereinrichtung entsprechende Informationen über die Stabilität des Fahrzeugs erhält.

Nachfolgend wird eine bevorzugte Ausführungsform der Erfindung unter Bezug auf die Zeichnung beschrieben, in der
- Fig. 1: schematisch einzelne Elemente eines erfindungsgemäßen Kraftwagens veranschaulicht und
- Fig. 2: in einem Schaubild den Fluss von Daten zwischen den einzelnen Elementen aus Fig. 1 veranschaulicht,
- Fig. 3: den Verlauf einer Bandbreite für das Drehmoment eines Antriebs veranschaulicht, wie ihn ein erstes Steuergerät vorgibt,
- Fig. 4: einen eben solchen Verlauf veranschaulicht, wie ihn ein zweites Steuergerät in Antwort auf die Vorgabe des ersten Steuergeräts ausgibt,
- Fig. 5A, 5B: veranschaulichen, wie in zwei unterschiedlichen Situationen das erste Steuergerät letztlich das Drehmoment auswählt.

In einem im Ganzen mit 10 bezeichneten Kraftfahrzeug steht als Antrieb zunächst eine Verbrennungskraftmaschine 12 zur Verfügung; diese treibt eine Vorderachse 14 des Kraftfahrzeugs an. Für die Vorderachse 14 steht gleichzeitig ein elektrischer Antrieb 16 zur Verfügung, der aus einer Batterie 18 gespeist wird. Eine Einkopplung eines Antriebsmoments erfolgt hierbei über ein Getriebe 20. Es gibt einen zweiten elektrischen Antrieb 22 für eine Hinterachse 24 des Kraftfahrzeugs. Der zweite elektrische Antrieb wird aus der selben Batterie 18 gespeist. An einem Fahrpedal ("Gaspedal") 28 kann ein Fahrzeugführer vorgeben, wie schnell das Kraftfahrzeug 10 fahren soll, mit Hilfe eines Bremspedals 30 kann gebremst werden. Das Kraftfahrzeug 10 wird mit Hilfe eines Lenkrads 32 gelenkt. Mittels eines Betätigungselements 34 kann ein Modus eingestellt werden.

Ein Steuergerät 36 ermittelt, welches Gesamtdrehmoment von den einzelnen Rädern 38 des Kraftfahrzeugs aufzubringen ist. Hierbei muss zugeteilt werden, welches Teildrehmoment durch die Verbrennungskraftmaschine 12, durch den elektrischen Antrieb 16 und durch den elektrischen Antrieb 22 jeweils aufzubringen ist. Diese Zuteilung erfolgt durch das Steuergerät 36. Zur Ermittlung des Gesamtdrehmoments sowie zur Zuteilung erhält das Steuergerät 36 Messwerte, nämlich die Stellung s_{F} des Fahrpedals 28, die Stellung s_{B} des Bremspedals 30 und die Stellung St des Betätigungselements 34. Zudem ist eine Information über die Batterie 18 bereitgestellt, insbesondere eine Information über deren Temperatur T sowie eine Information über deren Ladezustand, symbolisch mit L gekennzeichnet; L kann eine Spannung sein, eine Menge der gespeicherten Ladung, oder ein Maß für die Alterung der Batterie sein. Aufgabe des Steuergeräts, das man auch als "Antriebsmanager" bezeichnen kann, ist die Zuteilung der Teildrehmomente zu den einzelnen Antrieben 16 und 22 bzw. der Verbrennungskraftmaschine 12 nach bestimmten Gesichtspunkten wie z. B. der Energieeffizienz.

Die Verteilung des Antriebsmoments auf die einzelnen Räder 38 hat jedoch auch Auswirkungen auf die Stabilität des Kraftfahrzeugs 10. Es geht nun auch darum, dass das Kraftfahrzeug 10 möglichst sicher auf dem Untergrund fährt, dass also das Fahrzeug stabil ist. Zu diesem Zweck ist nun vorliegend ein zweites Steuergerät 40 bereitgestellt, das man auch als "Fahrwerksmanager" bezeichnen kann. Das zweite Steuergerät 40 erhält Signale von einem Querbeschleunigungssensor 42, einem Längsbeschleunigungssensor 44 und einem Gierratensensor 46 und kennt den Lenkwinkel ϕ. Es stehen somit solche Informationen zur Verfügung, die eine Aussage über das stabile Fahrverhalten des Kraftfahrzeugs 10 auf dem Straßenuntergrund machen.

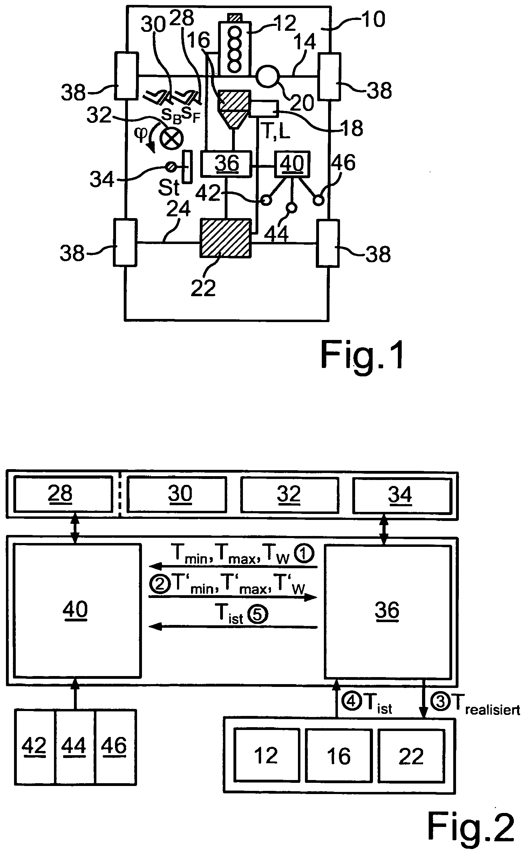

Durch das nachfolgend anhand der Fig. 2 beschriebene Verfahren soll nun unter Beteiligung des zweiten Steuergeräts 40 gewährleistet sein, dass das Fahrzeug tatsächlich sicher fährt.

Das erste Steuergerät 36 ermittelt zu diesem Zweck in an sich bekannter Weise ein Gesamtdrehmoment, das aufgrund der Fahreranforderungen auf die vier Räder 38 aufzubringen ist. Hierzu werden die Eingangsgrößen an den Elementen 28, 30, 32, 34, 18 und 26 berücksichtigt. Gleichzeitig kann auch die Drehzahl der Räder 38, die Geschwindigkeit des Kraftfahrzeugs, ein in einem Getriebe eingelegter Gang etc. verwendet werden.

Das Steuergerät 36 kann nun anhand der den Antrieben 16 und 22 bzw. deren Batterie 18 zugeordneten Größen zu jedem der Antriebe 16, 22 ermitteln, welches Drehmoment Tₘᵢₙ sie mindestens abgeben können, und welches Drehmoment Tₘₐₓ sie maximal abgeben können. Außerdem kann das Steuergerät 36 ein Wunschdrehmoment Tw ermitteln.

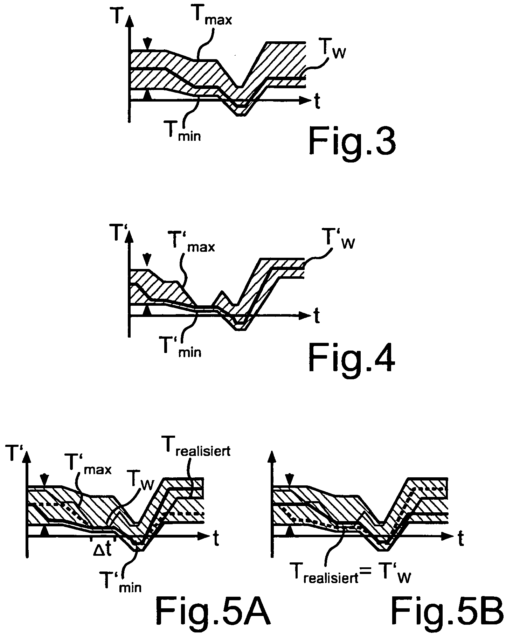

Eine Information über diese drei Größen gibt das Steuergerät 36 nun an das Steuergerät 40 ab. Dies geschieht während des Betriebs des Kraftfahrzeugs ständig, sodass sich insgesamt über die Zeit t ein Verlauf gemäß Fig. 3 ergibt: Die in Fig. 3 obere Kurve ist das maximale Drehmoment Tₘₐₓ, die in Fig. 3 untere Kurve das minimale Drehmoment Tₘᵢₙ, und die in Fig. 3 mittlere Kurve ist das Wunschdrehmoment T_{W}. Es ergibt sich somit ein schraffiert gezeichnetes Band von möglichen Drehmomenten T, das für unterschiedliche Zeiten t variiert.

Das zweite Steuergerät 40 empfängt nun die Information bezüglich der Grössen Tₘᵢₙ, Tₘₐₓ und T_{W}. Es empfängt ferner Messwerte bezüglich der Elemente 28, 30, 32 und 34. Zusätzlich empfängt das zweite Steuergerät 40 die Messwerte von den Sensoren 42, 44 und 46. Wegen Letzterem ist das zweite Steuergerät in der Lage, solche Drehmomente T aus dem in Fig. 3 schraffiert gezeichneten Band auszuschließen, bei denen die Fahrt des Kraftfahrzeugs 10 nicht ausreichend stabil wäre. Diese ausgeschlossenen Werte liegen am oberen oder am unteren Ende des Bandes zwischen Tₘᵢₙ und Tₘₐₓ. Mit anderen Worten legt das zweite Steuergerät neue Werte T'ₘₐₓ und T'ₘᵢₙ fest, die ein eingeschränktes Band, wie in Fig. 4 umgekehrt schraffiert gezeichnet, definieren. Gleichzeitig wird ein Wunschdrehmoment T'_{W} ausgegeben, bei dem die Fahrt des Kraftfahrzeugs einen Wunschstabilitätszustand hat, insbesondere besonders stabil ist. In einem zweiten Schritt werden somit die Werte T'ₘᵢₙ, T'ₘₐₓ und T'_{W} vom zweiten Steuergerät 40 an das erste Steuergerät 36 gesandt. Das erste Steuergerät 36 hat nun die Aufgabe, ein bestimmtes Teildrehmoment für die einzelnen Antriebe 16 und 22 definitiv festzulegen. Hierbei ist die Vorgabe, dass das erste Steuergerät 36 keine Teildrehmomente außerhalb des Bereichs zwischen T'ₘᵢₙ und T'ₘₐₓ festlegt.

Es kann nun zwischen zwei Fällen unterschieden werden. In einem Fall sei mit Hilfe des Betätigungselements 34 ein Effizienzmodus des Kraftfahrzeugs eingestellt. Dann kann besonders auf die Energieeffizienz geachtet werden. Es wäre also aus Sicht des ersten Steuergeräts 36 sinnvoll, würde das Wunschdrehmoment T_{W} umgesetzt werden. Dieses Wunschdrehmoment T_{w} ist in Fig. 5A eingezeichnet, dort sind auch T'ₘₐₓ und T'ₘᵢₙ eingezeichnet. Es gibt nun ein Zeitintervall Δ t, in dem T_{W} größer ist als T'ₘₐₓ. Somit kann während des Zeitintervalls Δ t das tatsächlich festgelegte Drehmoment Tᵣₑₐₗᵢₛᵢₑᵣₜ nicht gleich T_{W} sein. Während der übrigen Zeit wird Tᵣₑₐₗᵢₛᵢₑᵣₜ gleich Tw gesetzt. Im Intervall Δ t wird Tᵣₑₐₗᵢₛᵢₑᵣₜ möglichst nahe an T_{W} gesetzt, also an die Obergrenze gemäß T'ₘₐₓ aus Fig. 4.

Steht das Betätigungselement 34 in einem Sportmodus, so wird der Stabilität des Fahrzeugs Vorrang gegeben. In diesem Falle wird gemäß Fig. 5B Tᵣₑₐₗᵢₛᵢₑᵣₜ gleich T'w gesetzt, also der Wunschvorgabe des zweiten Steuergeräts 40 entsprochen.

Tᵣₑₐₗᵢₛᵢₑᵣₜ ist ein Teildrehmoment für einen der Antriebe, z. B. den Antrieb 16. Soll ausschließlich elektrisch gefahren werden, wird dieses Teildrehmoment Tᵣₑₐₗᵢₛᵢₑᵣₜ vom Gesamtdrehmoment G abgezogen, und man erhält dann das Teildrehmoment Tᵣₑₐₗᵢₛᵢₑᵣₜ, ₂ = G - Tᵣₑₐₗᵢₛᵢₑᵣₜ für den zweiten Antrieb 22.

Kommen gleich drei Antriebe ins Spiel, nämlich auch die Verbrennungskraftmaschine 12, dann werden gegebenenfalls die Grenzen von Bandbreiten für die Teildrehmomente von zweien der drei Antriebe ausgetauscht, und das dritte Teildrehmoment ergibt sich dann daraus.

In einem dritten Schritt sendet somit das zweite Steuergerät 36 eine Anforderung gemäß Tᵣₑₐₗᵢₛᵢₑᵣₜ an die Antriebe 16, 22 bzw. 12. In einem vierten Schritt enthält das erste Steuergerät 36 dann das tatsächlich umgesetzte Antriebsmoment Tᵢₛₜ zurück. Diese Information wird in einem fünften Schritt weitergegeben an das zweite Steuergerät 40, damit dieses zu späteren Zeitpunkten seine Rechnungen durchführen kann. Jedem neuen Durchführen des Schritts 1 geht der fünfte Schritt irgendwann voraus.

Das oben für die Teildrehmomente der Antriebe 16 und 22 Beschriebene lässt sich auch so abwandeln, dass jeweils Drehmomente, insbesondere minimale und maximale Drehmomente sowie Wunschdrehmomente, bezüglich mehrerer Antriebe gleichzeitig angegeben werden, insbesondere bezüglich von Antrieben, die auf die selbe Achse wirken; dies wären vorliegend die Antriebe 12 und 16, für die gemeinsam ein (Summen-)Drehmoment angegeben werden würde.

Es ist bei der obigen Beschreibung ferner davon ausgegangen, dass die angegebenen Teildrehmomente jeweils momentan gültige Werte sind. Es ist jedoch möglich, dass zusätzlich zu den momentan gültigen Werten, die eine Auskunft über die momentane Leistungsfähigkeit der Antriebe geben, Werte angegeben werden, die Ergebnis einer Prognose sind. Solche prognostizierten Werte können Auskunft über die Leistungsfähigkeit der Antriebe zu späteren Zeitpunkten geben, wie sie mit einer gewissen Wahrscheinlichkeit eintreten wird. Die prognostizierten Werte können sowohl von der ersten Steuereinrichtung 36 an die zweite Steuereinrichtung 40 gesandt werden, wie auch umgekehrt wieder zurück. Bei der Festlegung der Auswahlen aus den Drehmomentbändern können die prognostizierten Werte eine maßgebliche Rolle spielen.

Die Funktionalitäten, die in der obigen Figurenbeschreibung die beiden Steuergeräte 36 und 40 übernehmen, können auch durch Software bereitgestellt sein, insbesondere in einem einzigen Steuergerät laufende. Insofern, als vorliegend vom Senden von Daten gesprochen wird, geht es dann um einen Austausch von Datenwerten zwischen Softwarebausteinen bzw. Teilprogrammen in einer Software des einzigen Steuergeräts.

## Patentansprüche

1. Verfahren zum Betreiben eines Kraftfahrzeugs (10) mit zumindest zwei Antrieben (12, 16, 22), bei dem eine Eingabe eines Fahrzeugführers empfangen wird und aufgrund selbiger durch eine erste Steuereinrichtung (36), welche Erstmesswerte zu Erstgrößen empfängt, ein Gesamtdrehmoment ermittelt wird, wobei die erste Steuereinrichtung (36) zunächst eine Schar von Kombinationen jeweiliger Teildrehmomente für einzelne Antriebseinheiten vorgibt und hierzu Datensignale (Tₘᵢₙ, Tₘₐₓ, T_{W}) an eine zweite Steuereinrichtung sendet, die Zweitmesswerte empfängt zu von den Erstgrößen verschiedenen Zweitgrößen, und wobei die zweite Steuereinrichtung (40) eine Auswahl aus der Schar vornimmt und hierzu Datensignale (T'ₘᵢₙ, T'ₘₐₓ und T'_{W}) an die erste Steuereinrichtung (36) sendet, welche daraufhin das Gesamtdrehmoment in Teildrehmomente für die einzelnen Antriebseinheiten aufteilt und Steuerbefehle an selbige sendet, um die jeweiligen Teildrehmomente von ihnen anzufordern.

2. Verfahren nach Anspruch 1,
**dadurch gekennzeichnet, dass**
die erste Steuereinrichtung (36) eine Sendeinformation (Tₘₐₓ, Tₘᵢₙ) über ein maximales und ein minimales Teildrehmoment für eine an die zweite Steuereinrichtung (40) sendet, und dass diese in Antwort darauf eine Rücksendeinformation (T'ₘᵢₙ, T'ₘₐₓ, T'_{W}) über ein maximales und ein minimales Teildrehmoment für an die erste Steuereinrichtung (36) und/oder über ein festgelegtes Teildrehmoment für eine Antriebseinheit sendet, wobei zumindest für einen Zeitpunkt im Betrieb des Kraftfahrzeugs a) das maximale Drehmoment (Tₘₐₓ) und/oder das festgelegte Teildrehmoment (T'_{W}) gemäß der Rücksendeinformation kleiner als das maximale Teildrehmoment (Tₘₐₓ) gemäß der Sendeinformation ist und/oder b) das minimale Teildrehmoment (T'ₘᵢₙ) und/oder das festgelegte Teildrehmoment (T'_{W}) gemäß der Rücksendeinformation größer als das minimale Teildrehmoment (T'ₘᵢₙ) gemäß der Sendeinformation ist.

3. Verfahren nach Anspruch 1 oder 2,
**dadurch gekennzeichnet, dass**
die zweite Steuereinrichtung (40) Messwerte zu einer Gierrate des Kraftfahrzeugs, zu einer Längsbeschleunigung des Kraftfahrzeugs und/oder zu einer Querbeschleunigung des Kraftfahrzeugs und/oder zu einem Lenkwinkel an einer Lenkhandhabe (32) empfängt und gegebenenfalls bei der Auswahl der zumindest einen Kombination berücksichtigt.

4. Verfahren nach einem der vorhergehenden Ansprüche,
**dadurch gekennzeichnet, dass**
zumindest ein Antrieb ein elektrischer Antrieb (16, 22) ist und die elektrische Steuereinrichtung Messwerte (T, L) zu einer dem elektrischen Antrieb zugeordneten Batterie (18) empfängt.

5. Verfahren nach einem der vorhergehenden Ansprüche,
**dadurch gekennzeichnet, dass**
die erste Steuereinrichtung Messwerte betreffend eine Drehzahl eines Motors und/oder eine Temperatur eines Motors und/oder einen an einem Getriebe eingelegten Gang und/oder einen Betriebsmodus empfängt.

6. Kraftfahrzeug (10) mit zumindest zwei Antrieben (12, 16, 22) und einer ersten Steuereinrichtung (36) zum Zuteilen von Drehmoment zu den einzelnen Antrieben und Senden entsprechender Anforderungssignale an diese,
**dadurch gekennzeichnet, dass**
die erste Steuereinrichtung (36) mit einer zweiten Steuereinrichtung (40) gekoppelt ist, die ihrerseits mit zumindest einer Messeinrichtung (42, 44, 46) gekoppelt ist, welche von der ersten Steuereinrichtung (36) getrennt ist, wobei die erste Steuereinrichtung (36) ausgelegt ist, zunächst eine Schar von Kombinationen jeweiliger Teildrehmomente für die einzelnen Antriebe vorzugeben und hierzu Datensignale (Tₘᵢₙ, Tₘₐₓ, T_{W}) an eine zweite Steuereinrichtung zu senden, und wobei die zweite Steuereinrichtung (40) ausgelegt ist, eine Auswahl aus der Schar vorzunehmen und hierzu Datensignale (T'ₘᵢₙ, T'ₘₐₓ und T'_{W}) an die erste Steuereinrichtung (36) zu senden, wobei sie ausgelegt ist, Messwerte der zumindest einen Messeinrichtung (42, 44, 46) bei der Bildung der ausgesandten Datensignale zu berücksichtigen, wobei die erste Steuereinrichtung (36) ferner ausgelegt ist, auf einen Empfang der Datensignale (T'ₘᵢₙ, T'ₘₐₓ und T'_{W}) hin das Gesamtdrehmoment in Teildrehmomente für die einzelnen Antriebe aufzuteilen und Steuerbefehle an selbige zu senden, um die jeweiligen Teildrehmomente von ihnen anzufordern.

7. Kraftfahrzeug (10) nach Anspruch 6,
**dadurch gekennzeichnet, dass**
die zumindest eine Messeinrichtung (42, 44, 46) einen Gierratensensor (46), einen Längsbeschleunigungssensor (44) und/oder einen Querbeschleunigungssensor (42) und/oder Mittel zum Messen eines Lenkwinkels an einer Lenkhandhabe (32) umfasst.

## Claims

1. A method for operating a motor vehicle (10) having at least two drives (12, 16, 22), wherein an input by a vehicle driver is received and on the basis of said input, an overall torque is determined by a first control unit (36) that receives first measurement values in respect of first variables, wherein the first control unit (36) initially specifies a plurality of combinations of respective sub-torques for individual drive units and transmits in respect of this data signals (Tₘᵢₙ, Tₘₐₓ, T_{W}) to a second control unit that receives second measurement values in respect of two second variables that differ from the first variables, and wherein the second control unit (40) carries out a selection from the plurality and transmits in respect thereof data signals (T'ₘᵢₙ, T'ₘₐₓ and T'_{W}) to the first control unit (36), which subsequently divides the overall torque into sub-torques for the individual drive units and transmits control commands to the latter, in order to request the respective sub-torques therefrom.

2. The method as claimed in claim 1,
**characterised in that**
the first control unit (36) transmits a piece of transmission information (Tₘₐₓ, Tₘᵢₙ) in respect of a maximum and a minimum sub-torque for a [sic] to the second control unit (40), and **in that** the latter transmits, in response thereto, a piece of return information (T'ₘᵢₙ, T'ₘₐₓ, T'w) in respect of a maximum and a minimum sub-torque for [sic] to the first control unit (36) and/or in respect of a fixed sub-torque for a drive unit, wherein at least for one point in time during the operation of the motor vehicle, a) the maximum torque (Tₘₐₓ) and/or the fixed sub-torque (T'_{W}) according to the return information is/are smaller than the maximum sub-torque (Tₘₐₓ) according to the transmission information, and/or b) the minimum sub-torque (T'ₘᵢₙ) and/or the fixed sub-torque (T'_{W}) according to the return information is/are greater than the minimum sub-torque (T'ₘᵢₙ) according to the transmission information.

3. The method as claimed in claim 1 or 2,
**characterised in that**
the second control unit (40) receives measurement values with regard to a yaw rate of the motor vehicle, to a longitudinal acceleration of the motor vehicle and/or to a transverse acceleration of the motor vehicle and/or to a steering angle on a steering handle (32) and, if necessary, takes it into consideration during the selection of at least one combination.

4. The method as claimed in any one of the preceding claims,
**characterised in that**
at least one drive is an electric drive (16, 22) and the electric control unit receives measurement values (T, L) in respect of a battery (18) associated with the electric drive.

5. The method as claimed in any one of the preceding claims,
**characterised in that** the first control unit receives measurement values with regard to a rotary speed of an engine and/or a temperature of an engine and/or a gear position in a transmission and/or an operating mode.

6. A motor vehicle (10) having at least two drives (12, 16, 22) and a first control unit (36) for apportioning torque to the individual drives and for transmitting corresponding request signals thereto,
**characterised in that**
the first control unit (36) is coupled with a second control unit (40) which in turn is coupled with at least one measurement unit (42, 44, 46), which is separated from the first control unit (36), wherein the first control unit (36) is designed to specify initially a plurality of combinations of respective sub-torques for the individual drives and to transmit in respect thereof data signals (Tₘᵢₙ, Tₘₐₓ, T_{W}) to a second control unit, and wherein the second control unit (40) is designed to carry out a selection from the plurality and to transmit in respect thereof data signals (T'ₘᵢₙ, T'ₘₐₓ and T'_{W}) to the first control unit (36), and which is designed to take into account measurement values of the at least one measurement unit (42, 44, 46) during the formation of the emitted data signals, wherein the first control unit (36) is further designed to divide, upon reception of the data signals (T'ₘᵢₙ, T'ₘₐₓ and T'_{W}), the overall torque into sub-torques for the individual drives and to transmit control commands to the latter, in order to request the respective sub-torques therefrom.

7. The motor vehicle (10) as claimed in claim 6,
**characterised in that**
the at least one measurement unit (42, 44, 46) comprises a yaw rate sensor (46), a longitudinal acceleration sensor (44) and/or a transverse acceleration sensor (42) and/or means for measuring a steering angle on a steering handle (32).

## Revendications

1. Procédé pour faire fonctionner un véhicule automobile (10) avec au moins deux dispositifs d'entraînement (12, 16, 22), selon lequel on reçoit une entrée d'un conducteur de véhicule et, sur la base de celle-ci, on détermine un couple total au moyen d'un premier dispositif de commande (36) qui reçoit des valeurs mesurées primaires pour des grandeurs primaires, le premier dispositif de commande (36) prescrivant d'abord un jeu de combinaisons de couples partiels respectifs pour des unités d'entraînement individuelles et envoyant ensuite des signaux de données (Tₘᵢₙ, Tₘₐₓ, T_{W}) à un deuxième dispositif de commande qui reçoit des valeurs mesurées secondaires pour des grandeurs secondaires différentes des grandeurs primaires et le deuxième dispositif de commande (40) effectuant une sélection dans le jeu et envoyant ensuite des signaux de données (T'ₘᵢₙ, T'ₘₐₓ et T'_{W}) au premier dispositif de commande (36) qui divise alors le couple total en couples partiels pour les unités d'entraînement individuelles et qui envoie des instructions de commande à celles-ci pour leur demander les couples partiels respectifs.

2. Procédé selon la revendication 1, **caractérisé en ce que** le premier dispositif de commande (36) envoie au deuxième dispositif de commande (40) une information d'envoi (Tₘₐₓ, Tₘᵢₙ) concernant un couple partiel maximal et un couple partiel minimal et **en ce que** ledit deuxième dispositif de commande envoie en réponse au premier dispositif de commande (36) une information de renvoi (T'ₘᵢₙ, T'ₘₐₓ et T'_{W}) concernant un couple partiel maximal et un couple partiel minimal et/ou un couple partiel fixé pour une unité d'entraînement, sachant que, au moins pour un instant lors du fonctionnement du véhicule automobile, a) le couple maximal (Tₘₐₓ) et/ou le couple partiel fixé (T'_{W}) selon l'information de renvoi sont plus petits que le couple partiel maximal (Tₘₐₓ) selon l'information d'envoi et/ou b) le couple partiel minimal (T'ₘᵢₙ) et/ou le couple partiel fixé (T'_{W}) selon l'information de renvoi sont plus grands que le couple partiel minimal (T'ₘᵢₙ) selon l'information d'envoi.

3. Procédé selon la revendication 1 ou 2, **caractérisé en ce que** le deuxième dispositif de commande (40) reçoit des valeurs mesurées pour un taux de lacet du véhicule automobile, pour une accélération longitudinale du véhicule automobile et/ou pour une accélération transversale du véhicule automobile et/ou pour un angle de braquage sur un volant de direction (32) et les prend éventuellement en compte lors de la sélection de l'au moins une combinaison.

4. Procédé selon l'une des revendications précédentes, **caractérisé en ce qu'**au moins un dispositif d'entraînement est un dispositif d'entraînement électrique (16, 22) et **en ce que** le dispositif de commande électrique reçoit des valeurs mesurées (T, L) concernant une batterie (18) associée au dispositif d'entraînement électrique.

5. Procédé selon l'une des revendications précédentes, **caractérisé en ce que** le premier dispositif de commande reçoit des valeurs mesurées concernant une vitesse de rotation d'un moteur et/ou une température d'un moteur et/ou un rapport choisi d'une boîte de vitesses et/ou un mode de fonctionnement.

6. Véhicule automobile (10) avec au moins deux dispositifs d'entraînement (12, 16, 22) et un premier dispositif de commande (36) pour répartir un couple sur les dispositifs d'entraînement individuels et pour envoyer à ceux-ci des signaux de demande correspondants,
**caractérisé en ce que** le premier dispositif de commande (36) est couplé à un deuxième dispositif de commande (40) qui est couplé pour sa part à au moins un dispositif de mesure (42, 44, 46) qui est séparé du premier dispositif de commande (36), le premier dispositif de commande (36) étant conçu pour prescrire d'abord un jeu de combinaisons de couples partiels respectifs pour les dispositifs d'entraînement individuels et pour envoyer ensuite des signaux de données (Tₘᵢₙ, Tₘₐₓ, T_{W}) à un deuxième dispositif de commande, le deuxième dispositif de commande (40) étant conçu pour effectuer une sélection dans le jeu et pour envoyer ensuite des signaux de données (T'ₘᵢₙ, T'ₘₐₓ, T'_{W}) au premier dispositif de commande (36) et étant conçu pour prendre en compte des valeurs mesurées de l'au moins un dispositif de mesure (42, 44, 46) lors de la formation des signaux de données envoyés, le premier dispositif de commande (36) étant aussi conçu pour, en réaction à une réception des signaux de données (T'ₘᵢₙ, T'ₘₐₓ, T'_{W}), diviser le couple total en couples partiels pour les dispositifs d'entraînement individuels et envoyer des instructions de commande à ceux-ci pour leur demander les couples partiels respectifs.

7. Véhicule automobile (10) selon la revendication 6, **caractérisé en ce que** l'au moins un dispositif de mesure (42, 44, 46) comprend un capteur de taux de lacet (46), un capteur d'accélération longitudinale (44) et/ou un capteur d'accélération transversale (42) et/ou des moyens pour mesurer un angle de braquage sur un volant de direction (32).
